(19) Europäisches Patentamt

European Patent Office

Office européen des brevets

(11) **EP 4 782 225 A1**

(12) **EUROPEAN PATENT APPLICATION**

(43) Date of publication:
**29.07.2026 Bulletin 2026/31**

(21) Application number: **25153429.3**

(22) Date of filing: **22.01.2025**

(51) International Patent Classification (IPC):
**B60C 11/24** (2006.01)          **B60C 23/04** (2006.01)

(52) Cooperative Patent Classification (CPC):
**B60C 11/246; B60C 23/0408**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Bridgestone Mobility Solutions B.V.**
  **1083 HK Amsterdam (NL)**
• **Bridgestone Europe NV/SA**
  **1930 Zaventem (BE)**

(72) Inventors:
• **VERHEIJEN, Paul Roeland**
  **1083 HK Amsterdam (NL)**
• **ALLEVA, Lorenzo**
  **1930 Zaventem (BE)**
• **BORTOLOTTO, Valerio**
  **1930 Zaventem (BE)**

(74) Representative: **Dehns**
  **10 Old Bailey**
  **London EC4M 7NG (GB)**

(54) **TIRE WEAR ASSESSMENT**

(57)     A computer implemented method (100) for assessing the impact of vehicle usage on wear of at least one tire (2) on a first vehicle (1), comprising: obtaining data indicative of the load acting on the tire (2), and of the longitudinal acceleration, lateral acceleration, and speed of the first vehicle (1); calculating tire wear energy index components for the least one tire (2) based on the obtained data. The tire wear energy index components comprise one or more of: cornering components; braking components; and positive longitudinal acceleration components. The method (100) comprises obtaining historical data comprising the same tire wear energy index components for tires on the first vehicle (1) and/or on another vehicle; calculating an average value for each tire wear energy index component in the historical data; comparing the calculated tire wear energy index components for the at least one tire (2) with the calculated average values; and generating an output based on the comparison.

Fig. 7

EP 4 782 225 A1

**Description**

<u>Technical Field</u>

The present invention relates to assessing the impact of vehicle usage on tire wear, in particular to computer implemented methods for assessing the impact of vehicle usage on the wear of at least one tire on a vehicle, and to a computer system configured to perform computer implemented methods for assessing the impact of vehicle usage on the wear of at least one tire on a vehicle.

<u>Background</u>

The cost of replacing worn out vehicle tires is significant. As such, reducing tire wear, and therefore increasing the distance which can be driven before tires need to be replaced is of significant benefit, both for individual motorists, and for businesses operating fleets of vehicles.

Methods of predicting when a tire will need to be replaced have been proposed, but these methods do not provide any insight into the factors which are affecting the tire wear.

<u>Summary of the Invention</u>

According to a first aspect, there is provided a computer implemented method for assessing the impact of vehicle usage on wear of at least one tire on a first vehicle, the method comprising:

> obtaining data (e.g. telematics information) indicative of the load acting on the tire, and of the longitudinal acceleration, lateral acceleration, and speed of the first vehicle;
> calculating tire wear energy index components for the least one tire on the first vehicle based at least in part on the obtained data, wherein the tire wear energy index is a measure of the wear energy exerted on the tire per unit distance or per unit time, and wherein the tire wear energy index components comprise one or more of:
>
>> cornering components;
>> braking components; and
>> positive longitudinal acceleration components,
>
> obtaining historical data comprising the same tire wear energy index components for tires on the first vehicle and/or on another vehicle;
> calculating an average value for each tire wear energy index component in the historical data;
> comparing the calculated tire wear energy index components for the at least one tire with the calculated average values for the corresponding components in the historical data; and
> generating an output based on said comparison, wherein the output comprises an indication of any differences between the calculated tire wear energy index components for the at least one tire, and the calculated average values for the corresponding components in the historical data.

It will be understood that tire wear energy is the frictional energy which is put through a vehicle tire. It will further be understood that the tire wear energy index is a measure of that frictional energy per unit distance (e.g. per km) or per unit time (e.g. per second), and that the tire wear energy index components are a measure of the component of that frictional energy which is attributable to driving acts such as cornering, braking, and acceleration (e.g. positive longitudinal acceleration). The tire wear energy index cornering component is a measure of the frictional energy which is put through the tire per unit distance (e.g. per km) or per unit time (e.g. per second) due to cornering. The tire wear energy index braking component is a measure of the frictional energy which is put through the tire per unit distance (e.g. per km) or per unit time (e.g. per second) due to braking. The tire wear energy index positive longitudinal acceleration component is a measure of the frictional energy which is put through the tire per unit distance (e.g. per km) or per unit time (e.g. per second) due to positive longitudinal acceleration (e.g. gathering speed).

It will be appreciated by the person skilled in the art that by comparing the current tire wear index components, which are calculated based on data which is indicative of the vehicle usage (load acting on the tire, and the longitudinal acceleration, lateral acceleration, and speed of the first vehicle) to historical values, the effect which the current vehicle usage is having on the wear of the vehicle tires can be assessed. It will further be appreciated by the skilled person that, because the separate components are calculated for cornering, braking, and acceleration, it can be understood which aspect of the vehicle usage is having the greatest effect which leads to greater insights, and therefore can lead to a more focussed approach to reducing tire wear in the future. In particular, specific driver behaviours (e.g. fast cornering, aggressive braking, sudden acceleration) can be identified as impacting the tire wear, and thus specific feedback can be provided to drivers to help them reduce tire wear.

In embodiments, the cornering component of the wear energy is calculated according to:

$$WE_{cornering} = \int m_{tire}^2 \, a_y^2 V_v dt$$

In embodiments, the braking component of the wear energy is calculated according to:

$$WE_{braking} = \int m_{tire}^2 \, a_{xneg}^2 V_v dt$$

In embodiments, the positive longitudinal acceleration component of the wear energy is calculated according to:

$$WE_{acceleration} = \int m_{tire}^2 \, a_{xpovisc}^2 V_v dt$$

In the equations above: $m_{tire}$ is the mass acting on a respective tire, $V_v$ is the speed of the vehicle, $a_y$ is the lateral acceleration, $a_{xneg}$ is the deceleration (negative acceleration), $a_{xposvisc}$ is the acceleration used to increase the speed (positive acceleration) considering also a component due to the air drag force.

The wear energy values which are calculated according to the above equations can be converted into wear energy index components by dividing by the distance or time over which the wear energy was calculated. The wear energy index components therefore represent the wear energy exerted on the tire per unit distance or per unit time.

In embodiments, the method comprises obtaining data indicative of the load acting on the tire, and of the longitudinal acceleration, lateral acceleration, and speed of the first vehicle throughout a trip undertaken by the first vehicle, and calculating the tire wear energy index components for said trip.

In embodiments, a trip may be defined as a single usage of the vehicle by a single driver. The start of a trip may be determined by monitoring when the vehicle is powered on. This may be achieved through voltage sensing. In other embodiments, the start of a trip is determined by monitoring when the vehicle moves. Movement of the vehicle may be monitored using location data (e.g. GPS data) and/or using accelerometer data which may be obtained from OBD/-CAN/FMS data. The end of the trip may be determined by monitoring when the vehicle is powered off.

In embodiments, the method is performed (e.g. locally) on the first vehicle. In such embodiments, the historical data comprises the same tire wear energy index components for tires on the first vehicle which have been calculated during previous trips undertaken by the vehicle. Said trips may have been undertaken by the current driver of the first vehicle, or by one or more other drivers. In embodiments, the historical data comprises an indication of the driver of the vehicle when the historical data was collected. In embodiments, the average value for each tire wear energy index component is calculated using only historical data which relates to drivers other than the current driver of the vehicle.

In embodiments, the method comprises obtaining historical data comprising the same tire wear energy index components for tires on a plurality of vehicles, wherein the average value for each tire wear energy index component is calculated using the historical data for the tires on the plurality of vehicles. The plurality of vehicles may include the first vehicle. The plurality of vehicles may comprise a fleet of vehicles (e.g. operated by a single operator). By using historical data from a plurality of vehicles, the average values for each tire wear energy index component may be more representative owing to the larger amount of data.

In embodiments, the output comprises advice to a driver of the vehicle on how to alter their driving behaviour to reduce tire wear (e.g. your tire wear energy index cornering components are higher than average, reduce cornering speed to reduce tire wear). The output may comprise specific advice to a driver of the vehicle on how to alter their driving behaviour to reduce tire wear e.g. advice to reduce cornering speed to a value X. The specific advice may be based on the current operating conditions, and or the vehicle type. In embodiments, the specific advice may be based on the historical data (e.g. braking advice may be provided based on an average braking distance from the current speed of the first vehicle according to the historical data).

In embodiments, the output comprises a report to a fleet manager that the driving behaviour of a driver of the vehicle is impacting tire wear.

In embodiments, the output comprises a score (e.g. a score out of 10) for each of the tire wear energy index components. In embodiments, the output comprises a total score which is calculated based on the scores for each of the tire wear energy index components. The calculation of scores may help fleet managers to quantify the behaviour of different drivers, and to compare drivers directly.

In embodiments, the method comprises providing the output on an output unit (e.g. providing the output to a driver on a driver output unit, and/or to a fleet manager on a fleet manager output unit).

In embodiments, the output is provided on a driver output unit (e.g. in the first vehicle) during a trip. The output may be generated based on the calculated tire wear energy index components for part of a trip, but provided to the driver during a second (subsequent) trip.

In embodiments, the method comprises calculating the tire wear energy index components for the at least one tire based on data obtained during a first part of a trip, comparing the calculated tire wear energy index components for the at least one tire with the calculated average values for the corresponding components in the historical data, and providing the output during a second (subsequent) part of the trip.

In embodiments, the method comprises calculating the tire wear energy index components for the at least one tire based on data obtained during a first trip, comparing the calculated tire wear energy index components for the at least one tire with the calculated average values for the corresponding components in the historical data, and providing the output during a second (subsequent) trip.

In embodiments, the driver output unit comprises a navigation device, and the advice to a driver of the vehicle on how to alter their driving behaviour is output by (e.g. a display screen of) a navigation device, (e.g. dependent on features of a displayed route). In an example, "Reduce cornering speed" may appear when the driver approaches a corner/roundabout on a displayed map.

In embodiments, the advice to a driver of the vehicle on how to alter their driving behaviour is a dynamic output provided during a trip e.g. based on the vehicle type of the first vehicle and/or the current real time operating conditions of the first vehicle.

In embodiments, the method comprises adding the calculated wear energy index components for the at least one tire to the historical data to generate new historical data.

In embodiments, the at least one tire is classified according to the axle on which it is mounted, wherein such tire axle classifications include at least steer axle tires and drive axle tires, and the average values for each tire wear energy index component are calculated using only historical data from tires having the same tire axle classification. In embodiments, the method comprises obtaining the tire axle classification of the at least one tire. In embodiments, the tire axle classification data may be manually input (e.g. by a technician when the tire is installed on the vehicle). Tire axle classification data may be stored locally on the vehicle or may be stored in a remote (e.g. cloud based) server. Tires on different axles are subjected to different forces. For example, a steer axle tire may be subjected to greater frictional forces associated with cornering than a tire on another axle. Further, drive axle tires are subjected to frictional forces associated with longitudinal positive acceleration (gathering speed) which tires on other axles are not. By calculating the average values for each tire wear energy index component using only historical data from tires having the same axle classification, these differences can be removed from the comparison, which may result in a more meaningful comparison and provide better insights into the effect of vehicle usage such as driver behaviour.

In embodiments, a positive longitudinal acceleration tire wear energy index component is calculated only for tires classified as drive axle tires.

In embodiments, the first vehicle is a heavy goods vehicle (HGV), wherein the at least one tire is classified as one of a steer axle tire, a drive axle tire, or a trailer tire and wherein the average values for each tire wear energy index component are calculated using only historical data from tires having the same classification.

In embodiments, the average values for each tire wear energy index component are calculated using only historical data which relates to tires on vehicles within the plurality of vehicles which are of the same type as the first vehicle. In such embodiments, the method may comprise obtaining data indicative of the vehicle type of the first vehicle, and the historical data may comprise data indicative of the vehicle type of the vehicle for which it was collected. Data indicative of the vehicle type may comprise one or more of data indicative of:

- Vehicle class (e.g. passenger cars, minibuses, buses, coaches, light goods vehicles (LGVs), heavy goods vehicles (HGVs)
- Weight classification
- Axle layout (e.g. 2 axle tractor, 3 axle tractor with one steer axle and two drive axles [SDD], 3 axle tractor with two steer axles and one drive axle [SDS])
- Vehicle manufacturer
- Vehicle model
- Vehicle weight

Tires on different types of vehicles are subjected to different forces. For example, the conditions experienced by an HGV tractor tire are very different to those experienced by the tire on a passenger car, or even an LGV. By calculating the average values for each tire wear energy index component using only historical data from tires on vehicles of the same type, these differences can be removed from the comparison, which may result in a more meaningful comparison and provide better insights into the effect of vehicle usage such as driver behaviour.

In embodiments, the method comprises determining one or more operating conditions of the vehicle and wherein the average values are calculated using only historical data which relates to tires on the first vehicle and/or on other vehicles operating under at least one of the same operating conditions. In such embodiments, it will be understood that the historical data comprises information about the operating conditions of the vehicle on which the tire was mounted at the time when the historical data was collected. The operating conditions of a vehicle may significantly impact the tire wear. For example, the tires on a vehicle operating on a curvy road with multiple changes of direction and speed will experience more frictional energy than tires on the same vehicle driving along a highway at constant speed and direction. By calculating the average values for each tire wear energy index component using only historical data from tires on vehicles which were operating under the same conditions, these differences can be removed from the comparison, which may result in a more meaningful comparison and provide better insights into the effect of vehicle usage such as driver behaviour.

It will be understood that operating conditions are conditions, other than driver behaviour, which may affect the wear of the tires on the first vehicle. Operating conditions may include external conditions (e.g. road type, temperature), and vehicle conditions (e.g. a load condition of the vehicle). Vehicle usage may encompass both operating conditions and driver behaviour.

In embodiments, the average values for each tire wear energy index component are calculated using only historical data which relates to tires of vehicles operating under a plurality of the same operating conditions

In embodiments, the operating conditions comprise one or more of: load condition, road type, ambient temperature, season, terrain.

In embodiments, load condition may be classified as either unladen or laden. In embodiments, the load condition may be the exact vehicle load. In embodiments, the load condition may be classified as a percentage of the maximum load of the vehicle. In such embodiments, the load condition may be classified within bins and vehicles with loads falling within the same bin may be considered to have the same load condition, e,g. 0-10% of max load, 11-20% of max load, 21-30% of max load, 31-40% of max load etc.

In embodiments, the ambient temperature operating condition may be the exact ambient temperature. In embodiments, the ambient temperature operating condition may be classified within bins and vehicles operating in ambient temperature falling within the same bin may be considered to be operating at the same ambient temperature, e.g. -9°C - 0°C, 1°C - 10°C, 11°C - 20°C, 21°C - 30°C, 31°C - 40°C.

In embodiments, the season may be used as an operating condition in place of temperature. In embodiments, the season may be classified as either summer or winter.

The temperature and season may affect tire wear. For example, in colder temperatures, the compound of the tire will be harder, leading to reduced grip. This reduced grip may lead to greater amounts of slip, resulting in increased tire wear.

In embodiments, the terrain may be classified as either flat or mountainous.

In embodiments, road type classifications include curvy roads, and highways (e.g. the road type may be classified as either a curvy road or a highway). In embodiments, the road type classifications may include further classes, such as , light curvy (e.g. a less severe curvy road), severe curvy (e.g. a very curvy road), normal (e.g. a combination of curvy roads and highways)

In embodiments, determining the operating conditions of the first vehicle comprises obtaining one or more of: data indicative of the vehicle location (e.g. GPS data), data indicative of the vehicle load, temperature data, date data, vehicle altitude data. In embodiments, the method comprises obtaining said data from the first vehicle (e.g. from telematics information). Said data may be may be contained in OBD/CAN/FMS data and obtained as part of the method.

In embodiments, the method comprises obtaining data indicative of a location of the first vehicle (e.g. during a trip), determining on which road within a navigable network the first vehicle is travelling, and determining the road type of said road using a database comprising pre-set road type classifications for the roads within the navigable network. Said determination may be performed at a plurality of times throughout a trip of the first vehicle. Determining the road type based on pre-set road type classifications may reduce the computational demand of the method compared to other methods of determining the road type (e.g. based on vehicle dynamic data).

In embodiments, the method comprises determining the road type of a road on which the first vehicle is travelling using the obtained data indicative of the longitudinal acceleration, lateral acceleration, and speed of the first vehicle. In embodiments, the lateral accelerations may be compared to a threshold, and if the lateral accelerations exceed the threshold (e.g. on a plurality of occasions) then it may be determined that the vehicle is travelling on a curvy road. In embodiments, if the longitudinal acceleration data shows a near constant speed and the speed is consistent with highway speeds then it may be determined that the vehicle is travelling on a highway. Determining the road type based on vehicle dynamic data may alleviate the need to access a database with pre-set road classifications.

In embodiments, if it is determined that the vehicle travelled on a combination of curvy roads and highways during a trip, the method may comprise determining on which road type the trip distance (or trip duration) was predominantly covered and classifying the road type for the trip as the road type on which the trip distance (or trip duration) was predominantly covered. It may be determined that the trip distance (or trip duration) was predominantly covered on one road type if more than 50% of the trip distance (or trip duration) was covered on said road type.

According to a second aspect of the invention, there is provided a computer implemented method for assessing the impact of vehicle usage on wear of at least one tire on a first vehicle, the method comprising:

obtaining data indicative of the load acting on the tire, and of the longitudinal acceleration, lateral acceleration, and speed of the first vehicle;

calculating tire wear rate components for the least one tire on the first vehicle based at least in part on the obtained data, wherein the tire wear rate components comprise one or more of:

cornering components;
braking components; and
positive longitudinal acceleration components,

obtaining historical data comprising the same tire wear rate components for tires on the first vehicle and/or on another vehicle;

calculating an average value for each tire wear rate component in the historical data;

comparing the calculated tire wear rate components for the at least one tire with the calculated average values for the corresponding components in the historical data; and

generating an output based on said comparison, wherein the output comprises an indication of any differences between the calculated tire wear rate components for the at least one tire, and the calculated average values for the corresponding components in the historical data.

It will be appreciated that this aspect may include one or more (e.g. all) of the features disclosed herein, e.g. relating to other aspects and embodiments, as applicable.

It will be understood that tire wear rate is a measure of the tread depth worn away per unit distance or per unit time. It will further be understood that the cornering component of the tire wear rate is a measure of the tread depth worn away per unit distance or per unit time due to cornering forces, that the braking component of the tire wear rate is a measure of the tread depth worn away per unit distance or per unit time due to braking forces, and that the positive longitudinal acceleration component of the tire wear rate is a measure of the tread depth worn away per unit distance or per unit time due to positive longitudinal acceleration forces,

In embodiments, calculating the tire wear rate components for the least one tire on the first vehicle comprises calculating tire wear energy components based on the obtained data, applying a weighting factor to each component to convert the tire wear energy components into tire wear components, and dividing by distance or time (e.g. the total trip distance or total trip time) to calculate the tire wear rate components.

In embodiments, the method comprises obtaining tire technical data of the at least one tire (i.e. the tire being assessed), and, when calculating the wear rate components, using weighting factors which have been derived for tires having the same tire technical data. Tire technical data may include one or more of: the tire manufacturer, the tire model, the tire pattern, the tire specification, the tire size, the tire mounting position, retread information, and batch number of the tire. The weighting factors may be derived using experimental data. As such, the weighting factors may be specific to the type of tire for which they were derived. The use of tire specific weighting factors may improve the accuracy of the wear rate components.

In embodiments, the method comprises obtaining data indicative of which vehicle axle the first tire is mounted on (tire mounting position), and, when calculating the wear rate components, using weighting factors which have been derived for tires mounted on the same axle. The weighting factors may be derived using experimental data. As such, the weighting factors may be specific to the axle for which they were derived. The use of axle specific weighting factors may improve the accuracy of the wear rate components.

In embodiments, the method comprises obtaining data indicative of the vehicle type of the first vehicle, and, when calculating the wear rate components, using weighting factors which have been derived for vehicles of the same vehicle type. Data indicative of the vehicle type may comprise one or more of data indicative of:

- Vehicle class (e.g. passenger cars, minibuses, buses, coaches, light goods vehicles (LGVs), heavy goods vehicles (HGVs)
- Weight classification
- Axle layout (e.g. 2 axle tractor, 3 axle tractor with one steer axle and two drive axles [SDD], 3 axle tractor with two steer axles and one drive axle [SDS])
- Vehicle manufacturer
- Vehicle model
- Vehicle weight

The weighting factors may be derived using experimental data. As such, the weighting factors may be specific to the vehicle type for which they were derived. The use of vehicle type specific weighting factors may improve the accuracy of the wear rate components.

In embodiments, the method comprises obtaining tire pressure data of the at least one tire (i.e. the tire being assessed), and, when calculating the wear rate components, using weighting factors which have been derived for tires having the same (or similar) tire pressure. In embodiments, two tire pressures may be considered to be the same if the difference between them is smaller than a predetermined threshold. In embodiments, the weighting factors may have been derived for tires having a correct (e.g. recommended) pressure. In embodiments, the weighting factors associated with the correct pressure may be used to calculate the wear rate components if the tire pressure of the first tire is within a threshold of the recommended pressure. Said threshold may be expressed as a percentage of the recommended pressure. In embodiments, the weighting factors associated with the correct pressure may be used to calculate the wear rate components if the tire pressure of the first tire is greater than 90%, and less than 110% of the recommended tire pressure.

The weighting factors may be derived using experimental data. As such, the weighting factors may be specific to the tire pressure for which they were derived since differences in tire pressure can have a significant impact on tire wear. For example, if the tire pressure is too low (i.e., deviating from the recommended tire pressure), the contact area between the tire and the road is increased, and as a result, the tire wears faster than a correctly inflated tire. The use of tire pressure specific weighting factors may improve the accuracy of the wear rate components.

According to a third aspect of the invention, there is provided a computer system configured to perform a method for assessing the impact of vehicle usage on wear of at least one tire on a first vehicle, wherein the computer system is configured to:

> obtain data indicative of the load acting on the tire, and of the longitudinal acceleration, lateral acceleration, and speed of the first vehicle;
> calculate tire wear energy index components for the least one tire on the first vehicle based at least in part on the obtained data, wherein the tire wear energy index is a measure of the wear energy exerted on the tire per unit distance or per unit time, and wherein the tire wear energy index components comprise one or more of:
>
>> cornering components;
>> braking components; and
>> positive longitudinal acceleration components,
>
> obtain historical data comprising the same tire wear energy index components for tires on the first vehicle and/or on another vehicle;
> calculate an average value for each tire wear energy index component in the historical data;
> compare the calculated tire wear energy index components for the at least one tire with the calculated average values for the corresponding components in the historical data; and
> generate an output based on said comparison, wherein the output comprises an indication of any differences between the calculated tire wear energy index components for the at least one tire, and the calculated average values for the corresponding components in the historical data.

It will be appreciated that this aspect may include one or more (e.g. all) of the features disclosed herein, e.g. relating to other aspects and embodiments, as applicable.

According to a fourth aspect of the invention, there is provided a computer system configured to perform a method for assessing the impact of vehicle usage on wear of at least one tire on a first vehicle, wherein the computer system is configured to:

> obtain data indicative of the load acting on the tire, and of the longitudinal acceleration, lateral acceleration, and speed of the first vehicle;
> calculate tire wear rate components for the least one tire on the first vehicle based at least in part on the obtained data, wherein the tire wear rate components comprise one or more of:
>
>> cornering components;
>> braking components; and
>> positive longitudinal acceleration components,
>
> obtain historical data comprising the same tire wear rate components for tires on the first vehicle and/or on another vehicle;
> calculate an average value for each tire wear rate component in the historical data;

compare the calculated tire wear rate components for the at least one tire with the calculated average values for the corresponding components in the historical data; and

generate an output based on said comparison, wherein the output comprises an indication of any differences between the calculated tire wear rate components for the at least one tire, and the calculated average values for the corresponding components in the historical data.

It will be appreciated that this aspect may include one or more (e.g. all) of the features disclosed herein, e.g. relating to other aspects and embodiments, as applicable.

It will be understood that tire wear rate is a measure of the tread depth worn away per unit distance or per unit time. It will further be understood that the cornering component of the tire wear rate is a measure of the tread depth worn away per unit distance or per unit time due to cornering forces, that the braking component of the tire wear rate is a measure of the tread depth worn away per unit distance or per unit time due to braking forces, and that the positive longitudinal acceleration component of the tire wear rate is a measure of the tread depth worn away per unit distance or per unit time due to positive longitudinal acceleration forces,

In embodiments of the third and fourth aspects, the computer system is arranged in the vehicle.

In another embodiment of the third and fourth aspects the computer system is arranged outside the vehicle, e.g. in a remote server.

Brief Description of the Drawings

One or more non-limiting examples will now be described, by way of example only, and with reference to the accompanying figures in which:

Figure 1 schematically illustrates a vehicle;
Figures 2a-2c show routes followed during data gathering trips;
Figure 3a is a plot showing longitudinal acceleration on the x axis, and frequency on the y axis for curvy routes;
Figure 3b is a plot showing lateral acceleration on the x axis and frequency on the y axis for curvy routes;
Figure 4a is a plot with longitudinal acceleration on the x axis, and frequency on the y axis for highway routes;
Figure 4b is a plot with lateral acceleration on the x axis and frequency on the y axis for highway routes;
Figure 5a illustrates different conditions on which the development of the data driven mathematical tire wear model is based;
Figure 5b is a table showing KPM values for various axles of a vehicle for different road conditions and load scenarios;
Figure 5c shows the respective percentages of the results from Figure 5b;
Figure 6 schematically illustrates a system configured to perform the methods disclosed herein;
Figure 7 is a flow chart illustrating an embodiment of the method according to the present disclosure;
Figures 8a-c schematically illustrate outputs which may be provided to a driver;
Figures 9a-b schematically illustrate outputs which may be provided to a fleet manager;
Figure 10 schematically illustrates an output which may be provided to a driver;
Figure 11 schematically illustrates an output which may be provided to a driver during a trip.

Detailed Description

As used herein, the terms "comprise", "comprising", "comprises", "include", "including", "includes", "have", "has", "having", or variants thereof are open-ended, and include one or more stated features, integers, elements, steps, components, or functions but does not preclude the presence or addition of one or more other features, integers, elements, steps, components, functions, or groups thereof. When an element is referred to as being "connected", "coupled", "responsive", or variants thereof to another element, it can be directly connected, coupled, or responsive to the other element or intervening element(s) may be present. For example, an intervening element B may connect element A to element C. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items. Furthermore, to the extent that the term "or" is employed (e.g., A or B) it is intended to mean "A or B or both." When "only A or B but not both" is intended, then the term "only A or B but not both" will be employed. Thus, use of the term "or" herein is the inclusive, and not the exclusive use.

It will be understood that although the terms first, second, third, etc. may be used herein to describe various elements/operations, these elements/operations should not be limited by these terms. These terms are only used to distinguish one element/operation from another element/operation. Thus, a first element/operation in some embodiments could be termed a second element/operation in other embodiments without departing from the teachings of present inventive concepts. The same reference numerals or the same reference designators denote the same or similar elements throughout the specification.

The dimensions of elements in the drawings may be exaggerated for the sake of clarity. Further, it will be understood that when an element is referred to as being "on" another element, the element may be directly on the other element, or there may be an intervening element therebetween. Moreover, terms such as "top," "bottom," "upper," "lower," "above," "below," and the like are used herein to describe the relative positions of elements or features as shown in the figures. For example, when an upper part of a drawing is referred to as a "top" and a lower part of a drawing is referred to as a "bottom" for the sake of convenience, in practice, the "top" may also be called a "bottom" and the "bottom" may also be a "top" without departing from the teachings of the inventive concept (e.g., if the structure is rotated 180 degrees relative to the orientation of the figure).

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s). The computer program products may, for example, be provided as one or more modules of a software product encoded in an electrical, optical, or electromagnetic signal, for transmission to suitable receiver apparatus for execution by a data processing apparatus, e.g., downloadable over the internet.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Computer program instructions may also be stored in a non-transitory tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. The term "non-transitory tangible computer-readable medium" includes semiconductor memory devices, e.g., ROM (read only memory) EPROM (electrically erasable programmable read only memory), EEPROM (electrically erasable programmable read only memory), and flash memory devices; magnetic disks, e.g., internal hard disks or removable disks; magneto optical disks; and CD ROM and DVD-ROM disks. The term "non-transitory tangible computer-readable medium" is also intended to encompass types of storage devices that do not necessarily store information permanently, including for example, RAM (random-access memory), SRAM (static random-access memory), DRAM (dynamic random-access memory), and the like. Accordingly, embodiments of present inventive concepts may be embodied in hardware and/or in software (including firmware, resident software, micro-code, etc.) that runs on a processor (also referred to as a controller) such as a digital signal processor, which may collectively be referred to as "circuitry," "a module" or variants thereof. These terms, as well as the terms "component," "engine," "system," "apparatus," "interface," or the like, are generally intended to refer to a computer-related entity, either hardware (computing apparatus element(s)), a combination of hardware and software, or software only. For example, a component may be, but is not limited to being, a process running on a processor, a processor, an object, an executable, a thread of execution, a program, and/or a computer. By way of illustration, the term "component" may refer to an application running on a controller, or a combination of the application and the controller itself. One or more components may reside within a process and/or thread of execution and a component may be localized on one computer and/or distributed between two or more computers. The software may be in any programming language.

Embodiments of the subject matter described in this specification can be implemented in a computing system having one or more apparatus components, in one or more corresponding locations. The apparatus components may include a data server (or other back-end component) and may include one or more user devices (e.g. client computer(s)) having a user interface (e.g. graphical user interface, GUI) by which a user can interact with the computer system. In the case that the apparatus components of the system are in different locations, they may be interconnected by any form of digital data communication network, and, except when indicated otherwise, their collective functionality may be achieved by partitioning a computing process between the apparatus components of a computer system in any way. Examples of wired communication networks include a wired local area network ("LAN") and a wired wide area network ("WAN"), e.g., the Internet, which need not be co-owned with the rest of the computer system. Examples of wireless communication networks include wireless LANs (including Wi-Fi (Wireless Fidelity)), and their communication standards include LTE (Long Term Evolution), 4G (4th generation), or 5G (5th generation). In addition, there is LPWA (Low Power Wide Area) as a communication standard that enables wide-range communication with power saving, and BLE (Bluetooth Low Energy) including Bluetooth that is power saving and suitable for short distances. The client computers may comprise mobile devices (such as laptops, tablets, personal digital assistants (PDAs) and mobile phones).

In some cases, the computing system can include clients (e.g. client computer(s)) and servers. A client and server may be remote from each other and typically interact through a communication network. The client and server may run respective software which defines the client-server relationship.

A computer system being "configured" to perform particular operation(s) or action(s) means that the system has installed on its software, firmware, hardware, or a combination of them that in operation cause the system to perform the operations or actions. One or more computer programs being "configured" to perform particular operations or actions means that the one or more programs include instructions that, when executed by data processing apparatus, cause the apparatus to perform the operations or actions.

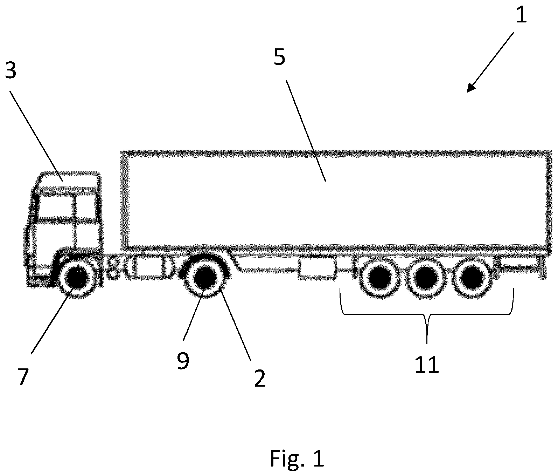

Figure 1 shows a vehicle 1. In the illustrated embodiment, the vehicle 1 is a heavy goods vehicle (HGV) comprising a tractor 3 and a trailer 5 and a plurality of tires 2, however it will be understood that the disclosed method is applicable to any suitable vehicle, including but not limited to, passenger cars, minibuses, buses, coaches and light goods vehicles (LGVs) such as vans. The vehicle 1 illustrated in Figure 1 has 5 axles. Two axles on the tractor 3, and 3 axles on the trailer 5. The front axle on the tractor 3 performs steering and so is classified as a steer axle 7, the rear axle on the tractor 3 provides drive, and so is classified as a drive axle 9. All 3 of the trailer axles are classified as trailer axles 11.

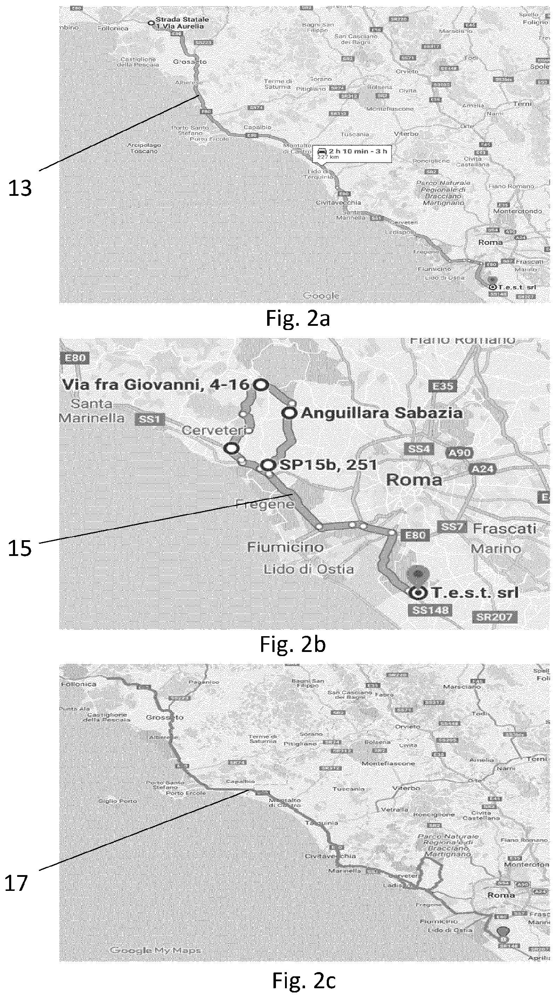

Figures 2a-c illustrate routes which were driven by a vehicle 1 during development of a data driven mathematical tire wear model. Figure 2a illustrates a route classified as a highway route 13. During highway driving, vehicles spend large portions of time driving at constant speed and without significant changes in direction. This lack of acceleration therefore typically leads to low tire wear.

Figure 2b illustrates a route involving roads classified as curvy roads 15. It can be seen from Figure 2b that this route contains much more frequent changes of direction. This likely correlates with longitudinal accelerations (e.g. braking for corners, and then accelerating after a corner). Curvy roads therefore typically lead to high tire wear.

Figure 2c illustrates a route classified as a normal route 17. This normal route is a combination of the highway route 13 and the curvy route 15.

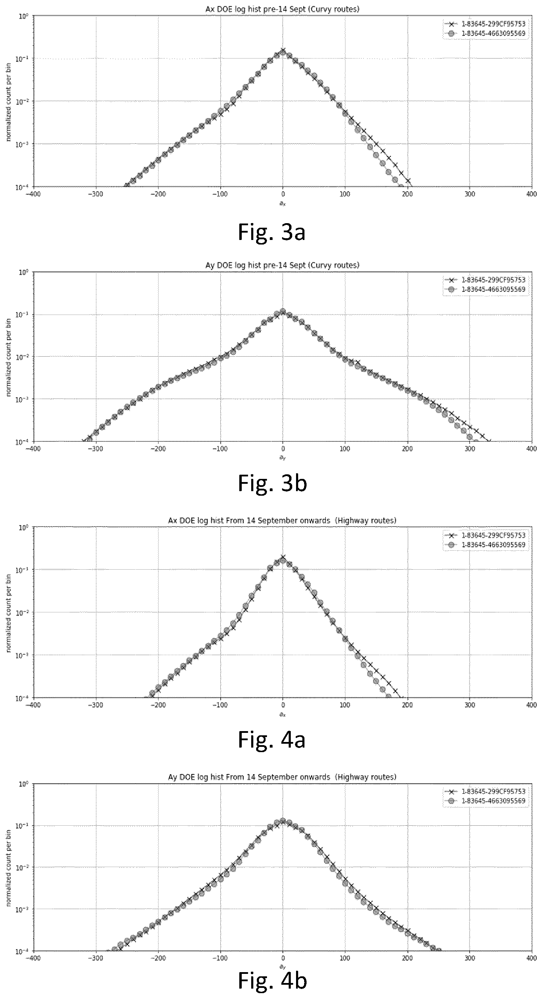

Figure 3a is a plot with longitudinal acceleration $a_x$ on the x axis, and frequency (normalised counts per bin) on the y axis for curvy routes. Figure 3b is a plot with lateral acceleration $a_y$ on the x axis and frequency (normalised counts per bin) on the y axis for curvy routes.

Figure 4a is a plot with longitudinal acceleration $a_x$ on the x axis, and frequency (normalised counts per bin) on the y axis for highway routes. Figure 4b is a plot with lateral acceleration $a_y$ on the x axis and frequency (normalised counts per bin) on the y axis for highway routes.

A comparison of Figure 3a with Figure 4a shows that the distribution of longitudinal acceleration values is more concentrated around 0 for highway routes than for curvy routes. The same conclusion can also be drawn from a comparison of figure 3b with Figure 4b, where the distribution of lateral acceleration values is more concentrated around 0 for highway routes than for curvy routes.

In each of Figures 3a, 3b, 4a, and 4b, two lines can be seen. The lines represented by dots relate to a fully laden vehicle, and the lines represented by crosses relate to an unladen vehicle. During this experimental running, the vehicles were instructed to drive in convoy, and so the lines are substantially the same, with the most notable difference being seen in higher longitudinal acceleration values for the unladen vehicle. This is due to the decreased weight.

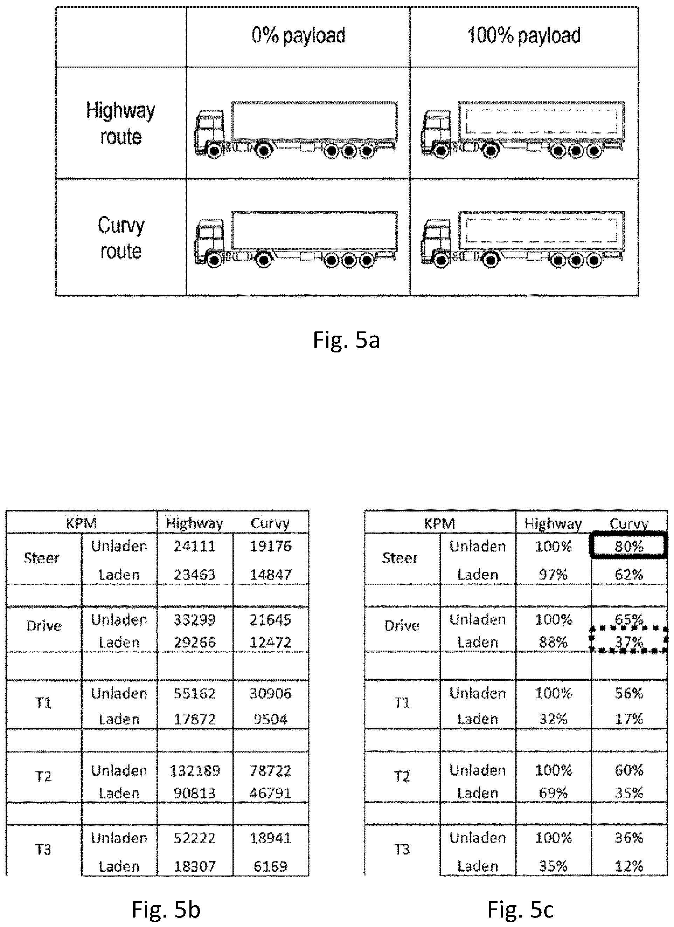

The development of the data driven mathematical tire wear model will now be described. Figure 5a illustrates different conditions on which the development of the data driven mathematical tire wear model is based. Vehicle telematics information such as speed, accelerations, gear shifts, engine RPMs, wheel speed, brake/throttle pedal position, tire inflation pressure, tire temperature, external temperature or steering wheel angle may be taken into consideration in predicting tire wear more accurately.

As explained in relation to the routes shown in Figures 2a-c, in a series of experiments, the respective vehicle telematics have been correlated with tire wear. The series of experiments has been performed on multiple tires focusing on the main variables which affect the tire wear, which include for example load, accelerations and temperature. Load status was defined as minimum and maximum load possible so that the full load excursion has been investigated for acceleration. In a similar way, curvy and highway routes have been defined in a way to maximize the differences in terms of lateral and longitudinal accelerations.

In the frame of the series of experiments, multiple vehicles 1 have been run in parallel during summer and winter periods on curvy roads and highways. The vehicles 1 had different loading conditions. In regular intervals, 3D scan-based tread wear measurements have been performed to define a 360° profile of the tires. Based on the measurements, a relationship between tire wear (e.g. per km) and vehicle telematics information has been extracted.

For different vehicle load scenarios, i.e., empty (unladen) and fully loaded (laden), the maximum distance which can be covered (in kilometres) by tires on different axles of the vehicle before the end of the life of the tires for different road types, i.e., highway and curvy road, and for different loading conditions, has been determined. Based on this, the distance which can be covered per mm tread wear of a tire has been determined. This value is denoted as kilometres per mm (KPM). In the table shown by Figure 5b, the KPM for various axles of a vehicle 1 for different road conditions and load scenarios is shown. With reference to Figure 1, Steer is the steer axle 7, drive is the drive axle 9, and T1, T2, and T3 are the trailer axles 11.

Figure 5c shows the respective percentages of the results from Figure 5b. It can be seen for example, in the case of a curvy road, the KPM of the tires mounted on the steer axle 7 of an unladen truck is expected to be 80% of the KPM of the tires mounted on the steer axle 7 of an unladen truck driving on a highway. Further, for tires mounted on the drive axle 9 of a vehicle 1 travelling on a curvy road, the KPM value of tires mounted on the drive axle 9 of a laden truck is only 37% compared to those on an unladen vehicle travelling on a highway.

A general formula obtained for the residual tread depth may be expressed as follows:

$$\text{ResidualTreadDepth} = F(\text{Mileage, Technical data of a tire, Technical data of the vehicle}, A_x, A_y, \text{Load, IP})$$

wherein $A_x$ is the longitudinal acceleration and $A_y$ is the lateral acceleration and IP is the tire inflation pressure.

In the data-driven mathematical tire wear model provided, the wear energy due to longitudinal accelerations is estimated. The wear energy may be calculated based on longitudinal force ($F_x$) and slip ($S_x$) where the slip is defined as the difference among wheel speed ($V_x$) and vehicle speed ($V_v$):

$$\delta WE = FxdSx = Fx(Vx - Vv)dt.$$

A respective slip ratio (SR) may be expressed by

$$SR = \frac{-Vv + Vx}{Vv}.$$

The wear energy formula then becomes

$$\delta WE = FxVv\, SR\, dt.$$

For small slip ratios (SR) it is possible to find a linear correlation among longitudinal force ($F_x$) and braking slip ratio ($B_p$SR):

$$F_x = BpSR.$$

Leveraging on this relationship it is possible to express the wear energy as

$$\delta WE = \frac{F_x^2}{B_p}V_v dt = \frac{m^2 a_x^2}{B_p}V_v dt,$$

wherein m is the mass of the respective tire of a vehicle. The above formula expresses the wear energy for a specific time interval. By integrating the above expression over a time period, it is possible to calculate the total wear energy due to longitudinal forces as

$$WE = \int \frac{m^2 a_x^2}{B_p} V_v \, dt = \frac{1}{B_p} \int m^2 a_x^2 V_v \, dt.$$

$B_p$ may change according to wear stage so in embodiments, the tire may be classified according to different wear stages and the wear energy may be recalculated accordingly.

A similar calculation may be performed for the wear energy due to lateral forces (with index y) considering that at small slip angle there is a linear correlation among lateral force and slip angle $\alpha$. For small slip ratios (SR) it is possible to find a linear correlation among lateral force (Fy) and slip angle $\alpha$ (Cp$\alpha$):

$$\delta WE = FydSy = FyV_y dt,$$

$$\alpha = arctan\left(\frac{Vy}{V_x}\right),$$

$$\delta WE = FyVydt = FyVv\alpha dt,$$

$$F_y = c_p \, \alpha,$$

$$\delta WE = \frac{F_y^2}{c_p} V_v dt = \frac{m^2 a_y^2}{c_p} V_v dt,$$

$$WE = \int \frac{m^2 a_y^2}{c_p} V_v \, dt = \frac{1}{c_p} \int m^2 a_y^2 V_v \, dt.$$

Different components of the wear energy can be calculated separately as follows:

The cornering component of the wear energy is affected by the lateral accelerations, and so is equal to

$$WE_{cornering} = \int m_{tire}^2 \, a_y^2 V_v dt \qquad\qquad Equation\ 1$$

The braking component of the wear energy is affected by the negative longitudinal accelerations, and so is equal to

$$WE_{braking} = \int m_{tire}^2 \, a_{xneg}^2 V_v dt \qquad\qquad Equation\ 2$$

The positive longitudinal acceleration component of the wear energy is affected by the positive longitudinal accelerations, and so is equal to

$$WE_{acceleration} = \int m_{tire}^2 \, a_{xpovisc}^2 V_v dt \qquad\qquad Equation\ 3$$

In the equations above $m_{tire}$ is the mass acting on a respective tire, $V_v$ is the speed of the vehicle, $a_y$ is the lateral acceleration, $a_{xneg}$ is the deceleration (negative acceleration), $a_{xposvisc}$ is the acceleration used to increase the speed (positive acceleration) considering also a component due to the air drag force.

The wear energy values which are calculated according to the above equations can be converted into wear energy index components by dividing by the distance or time over which the wear energy was calculated (e.g. the total trip distance or total trip time). The wear energy index components therefore represent the wear energy exerted on the tire per unit distance or per unit time.

Tires mounted on different axles experience different forces and so the wear energy expressions which are applicable may vary for tires mounted on different axles. The three wear energy components which are calculated in the disclosed method are a cornering component, a braking component, and a positive longitudinal acceleration component. The cornering forces and braking forces are experienced by all of the tires on the vehicle 1 which are in contact with the road surface. As such, the cornering and braking components are applicable to all tires, regardless of their axle classification. The positive longitudinal acceleration component is a result of the force which is put through the tires in order to increase the speed of the vehicle 1. Therefore, the positive longitudinal acceleration component is only applicable to tires which are mounted on a drive axle 9 of the vehicle 1.

The disclosed method can be performed using the wear energy index components. In embodiments, the disclosed method can alternatively be performed using tire wear rate components in place of the wear energy index components. It will be understood that the use of either the wear energy, or the wear rate, represent alternative solutions. In order to calculate tire wear rate components, weighting factors are applied to the wear energy expressions. These weighting factors are derived from the data-driven experiments including the 3D scan based tread wear measurements. Residuals for the longitudinal and lateral accelerations with respect to different road and load scenarios are determined. In a further step, weighting factors ($a_1$, $b_1$, etc.) are derived from the residuals which may be used to scale the general expression for the wear energy of a tire in order to obtain the data driven wear based on load and accelerations as follows:

The cornering component of the wear is affected by the lateral accelerations, and so is equal to

$$Wear_{cornering} = b * \int m_{tire}^2 \, a_y^2 V_v dt \qquad\qquad Equation\ 4$$

The braking component of the wear is affected by the negative longitudinal accelerations, and so is equal to

$$Wear_{braking} = c * \int m_{tire}^2 \, a_{xneg}^2 V_v dt \qquad\qquad Equation\ 5$$

The positive longitudinal acceleration component of the wear is affected by the positive longitudinal accelerations, and so is equal to

$$Wear_{acceleration} = d * \int m_{tire}^2 \, a_{xpovisc}^2 V_v dt \qquad\qquad Equation\ 6$$

Where b, c, and d in the above equations are weighting factors derived from experimental data.

The wear components which are calculated according to the above equations can be converted into wear rate components by dividing by the distance or time over which the wear was calculated (e.g. the total trip distance or total trip time). In embodiments, the wear rate components are expressed as the tread depth worn away per unit distance. In embodiments, the wear rate components are expressed in millimetres of tread depth worn away per kilometre.

The weighting factors are specific to the tires for which they were derived. As such, it will be understood that in embodiments where the wear rate components are calculated, tire technical data of the at least one tire (i.e. the tire being assessed) may be obtained as part of the method such that the correct weighting factors (which were derived for tires having the same tire technical data) can be applied. Tire technical data may include one or more of: the tire manufacturer, the tire model, the tire pattern, the tire specification, the tire size, the tire mounting position, retread information, and batch number of the tire. In particular, in embodiments, the weighting factors are specific to the axle on which the tires are mounted (indicated by the tire mounting position data). As such, different weighting factors may be calculated for tires on different axles. For example, the $WR_{cornering}$ weighting factor b may have a value $b_1$ for a steer axle tire, $b_2$ for a drive axle tire, $b_3$ for a first trailer axle tire, $b_4$ for a second trailer axle tire, and $b_5$ for a third trailer axle tire. Likewise, the $WR_{braking}$ weighting factor c may have a value $c_1$ for a steer axle tire, $c_2$ for a drive axle tire, $c_3$ for a first trailer axle tire, $c_4$ for a second trailer axle tire, and $c_5$ for a third trailer axle tire. Since the $WR_{acceleration}$ component applies only to the drive axle tires, there is only a drive axle value of the relevant weighting factor d.

The weighting factors may further be specific to the vehicle type for which they were derived. As such, it will be understood that in embodiments where the wear rate components are calculated, data indicative of the vehicle type may be obtained as part of the method such that the correct weighting factors (which were derived for tires on a vehicle of the same type) can be applied. Data indicative of the vehicle type may comprise one or more of data indicative of:

- Vehicle class (e.g. passenger cars, minibuses, buses, coaches, light goods vehicles (LGVs), heavy goods vehicles (HGVs)

- Weight classification
- Axle layout (e.g. 2 axle tractor, 3 axle tractor with one steer axle and two drive axles [SDD], 3 axle tractor with two steer axles and one drive axle [SDS])
- Vehicle manufacturer
- Vehicle model
- Vehicle weight

Further, the impact of the tire inflation pressure may be reflected by the weighting factors. In embodiments, experiments are performed by running vehicles together with different tire pressures. By measuring the tire wear experienced by each vehicle, a linear scale factor which is reflective of the effect of tire pressure on the wear rate can be derived. In such embodiments, the weighting factors are also specific to tires having the same tire pressure as the tires for which the weighting factors were derived. As such, it will be understood that in embodiments where the wear rate components are calculated, tire pressure data of the first vehicle may be obtained as part of the method such that the correct weighting factors (which were derived for tires having the same pressure) can be applied.

In embodiments, two tire pressures may be considered to be the same if the difference between them is smaller than a predetermined threshold. In embodiments, the weighting factors may have been derived for tires having a correct (e.g. recommended) pressure. In embodiments, the weighting factors associated with the correct pressure may be used to calculate the wear rate components if the tire pressure of the first tire is within a threshold of the recommended pressure. Said threshold may be expressed as a percentage of the recommended pressure. In embodiments, the weighting factors associated with the correct pressure may be used to calculate the wear rate components if the tire pressure of the first tire is greater than 90%, and less than 110% of the recommended tire pressure.

It will be understood that any combination (e.g. all) of the above variables may influence the weighting factors.

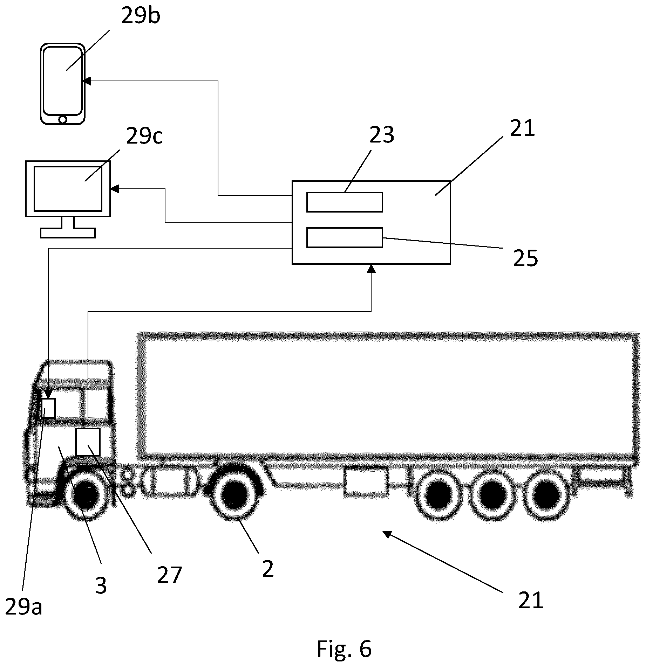

Figure 6 schematically illustrates a system 20 for performing the methods disclosed herein. The system 20 comprises a remote server 21 which is configured to perform the processing steps of the methods. As such, the remote server comprises a processor 23 and a memory 25. The system 20 also comprises a vehicle device 27 provided in the vehicle tractor 3. In embodiments, vehicle device 27 may be configured to obtain telematics data including at least data indicative of the load acting on each tire, and the longitudinal acceleration, lateral acceleration, and speed of the vehicle. The telematics data may be obtained via obtaining OBD/FMS/CAN data from the vehicle 1. The vehicle device 27 may be plugged into a port of the vehicle 1 such as an OBD port, FMS port, or other, or may communicate wirelessly with the vehicle 1. In embodiments, the vehicle device 27 may be a permanently installed transceiver box. In embodiments, the vehicle device 27 is networked and communicates via a wireless network connection (e.g. cellular network) to the remote server 21. In the illustrated embodiment, a plurality of output units 29 are provided. The remote server 21 is connected, via the wireless network, to an output unit 29a inside the cabin of the tractor 3, a driver's mobile device 29b, and a fleet manager's computer 29c.

By performing the processing steps at the remote server 21, data from a plurality of different vehicles can be processed together. However, in embodiments, the method may be performed using data only from a single vehicle. In such embodiments, the processing may be performed locally by the vehicle device 27. In such embodiments, the vehicle device 27 may itself comprise a processor and a memory, and may not need to communicate with a remote server 21.

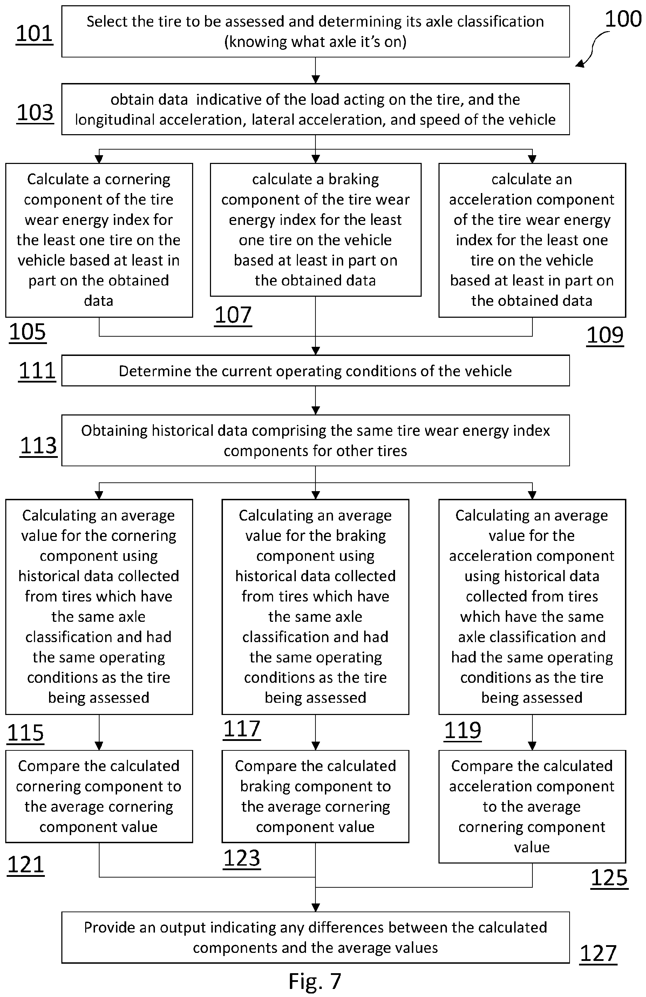

Figure 7 is a flow chart illustrating a method 100 according to this disclosure. At step 101, the tire 2 to be assessed is selected and its axle classification is determined. The axle classification of a tire 2 may be stored in memory, and may have been manually entered when the tire 2 was mounted on the vehicle 1.

At step 103, data indicative of the load acting on the tire 2, and the longitudinal acceleration, lateral acceleration, and speed of the vehicle is obtained. Data may be obtained continually throughout the trip. In embodiments, data is obtained at a fixed interval (e.g. 100ms) throughout the trip. In embodiments, data indicative of the load acting on the tire is obtained only once (e.g. at the start) during a trip whilst data indicative of the longitudinal acceleration, lateral acceleration, and speed of the vehicle is obtained continually.

All steps subsequent to step 103 may be performed after the trip has ended.

At step 105, a cornering component of the tire wear energy index is calculated for the tire 2 by calculating the cornering wear energy component for the current vehicle trip according to Equation 1, and then dividing that value by the distance covered during the trip, or by the duration of the trip.

At step 107, a braking component of the tire wear energy index is calculated for the tire by calculating the braking wear energy component for a vehicle trip according to Equation 2, and then dividing that value by the distance covered during the trip, or by the duration of the trip.

Step 109 concerns the positive longitudinal acceleration component. As explained above, this component is relevant only to tires which are mounted on a drive axle. As such, if the tire 2 being assessed was determined to be a drive axle tire at step 101, then step 109 is performed. However, if the tire 2 being assessed was determined not to be a drive axle tire at step 101, then step 109 is not performed. At step 109 a positive longitudinal acceleration component of the tire wear energy index is calculated for the tire by calculating the positive longitudinal acceleration wear energy component for a vehicle trip according to Equation 3, and then dividing that value by the distance covered during the trip, or by the duration of the trip.

At step 111, the current operating conditions of the vehicle 1 during the trip are determined. The operating conditions may comprise one or more of: load condition (e.g. laden or unladen), road type (e.g. curvy or highway), temperature, season (e.g. summer or winter) or terrain (e.g. flat or mountainous). In this exemplary embodiment, the operating conditions are the load condition, and the road type.

The load condition could be manually input at the start of a trip. Alternatively, the load condition could be derived from telematics data. In this exemplary embodiment, the load condition is classified as either laden or unladen. In embodiments however, the load condition may be more specifically classified. For example, the load condition may be classified as a percentage of the maximum load, e.g. 0-10% of max load, 11-20% of max load, 21-30% of max load, 31-40% of max load etc.

In this exemplary embodiment, the road type is determined by leveraging location data (e.g. GPS data), which can be obtained as part of the telematics data. Roads within a known navigable network are pre-classified as either curvy roads, or highways. As such, using the location data, it can be determined whether the vehicle 1 was travelling on a curvy road, or on a highway. In other embodiments, the road type may be defined by analysing the speed and acceleration data which is obtained. If the speed data shows periods of consistent highway speeds, and the acceleration data shows infrequent minor accelerations, then it can be determined that the vehicle 1 was travelling on a highway. By contrast, if the speed data shows significant variation, and the acceleration data shows frequent and intense accelerations, then it can be determined that the vehicle 1 was travelling on a curvy road. In embodiments, if it is determined that the vehicle 1 travelled on a combination of curvy roads and highways during the trip, the road type for the overall trip may be classified as normal. In embodiments, if it is determined that the vehicle 1 travelled on a combination of curvy roads and highways during the trip, the method may comprise determining whether the trip distance was made up predominantly or curvy roads, or predominantly of highways.

At step 113 historical data is obtained which comprises the same tire wear energy index components for other tires. In this exemplary embodiment the historical data was generated in relation to tires mounted on vehicles within a plurality of vehicles (e.g. a fleet) which are the same or substantially similar (e.g. HGVs with the same axle layout). The historical data comprises the tire wear index components for the tires, as well as the operating conditions under which the vehicles were operating when the historical data was collected. In embodiments, the historical data may be generated only in relation to tires 2 mounted on the vehicle 1 currently being assessed. Such embodiments may be applicable where different drivers drive the same vehicle and so a comparison with earlier data from the same vehicle (e.g. collected when other drivers were driving the vehicle) may be of value.

At step 115, an average value for the cornering component of the tire wear energy index is calculated using the historical data. At step 117 an average value for the braking component of the tire wear energy index is calculated using the historical data, and at step 119 an average value for the positive longitudinal acceleration component of the tire wear energy index is calculated using the historical data (if the tire is a drive axle tire). By tailoring which historical data is factored into the average, the insights which may be provided by a comparison of the current trip data with the average can be tailored. In the exemplary embodiment, the average value is calculated using historical data which was collected in relation to tires which have the same axle classification, and were operating under the same operating conditions (e.g. same load condition, same road type) as the tire 2 currently being assessed. By limiting the historical data which is factored into the average in this way, the impact of driver behaviour on the tire wear energy can be assessed. Other operating conditions which can be taken into account when calculating the average value include, but are not limited to: temperature, season, location, and terrain. In relation to step 113 above, it is explained that the historical data was generated in relation to tires mounted on vehicles within a plurality of vehicles (e.g. a fleet) which are the same or substantially similar (e.g. HGVs with the same axle layout). In embodiments where the historical data comprises data from different vehicle types (e.g. HGVs with different axle layouts, or different vehicle types such as HGVs and LGVs), the average may be calculated using only historical data which was collected from the same vehicle type, or from the same vehicle type with the same axle layout.

At steps 121, 123, and 125, the calculated cornering, braking, and positive longitudinal acceleration components are respectively compared to the average values for those components which have been calculated using the historical data, and at step 127 an output is provided which indicates any differences between the calculated components and the average values which were determined in steps 121, 123, and 125.

It will be appreciated by the person skilled in the art that by separately calculating wear energy index components for cornering, braking, and acceleration, and comparing them with an average value for that component, it can be determined not only whether a driver is causing more tire wear than average, but also why they are causing more tire wear than average, e.g. due to excessive cornering forces, excessive braking forces, or excessive acceleration forces. This in itself is advantageous, but if the average value is calculated using historical data which was collected from vehicles operating under different conditions, then it may not be clear whether the difference is due to driver behaviour, or just the difference in condition. For example, if the average is calculated using historical data which includes data collected on curvy roads and on highways, but the current trip was made entirely on curvy roads, then the cornering component is likely to be greater than the average even if the driver is driving appropriately for the road type.

It will therefore further be appreciated by the person skilled in the art that by tailoring which historical data is used to calculate the average value, the specific impact of driver behaviour can be assessed. For example, if the current trip was made on curvy roads, with a fully laden vehicle, and the average value was also calculated using only data collected from fully laden vehicles on curvy roads, then any difference is likely to be down to the behaviour of the driver.

The output provided at step 127 can comprise driver advice for the driver of the vehicle 1.

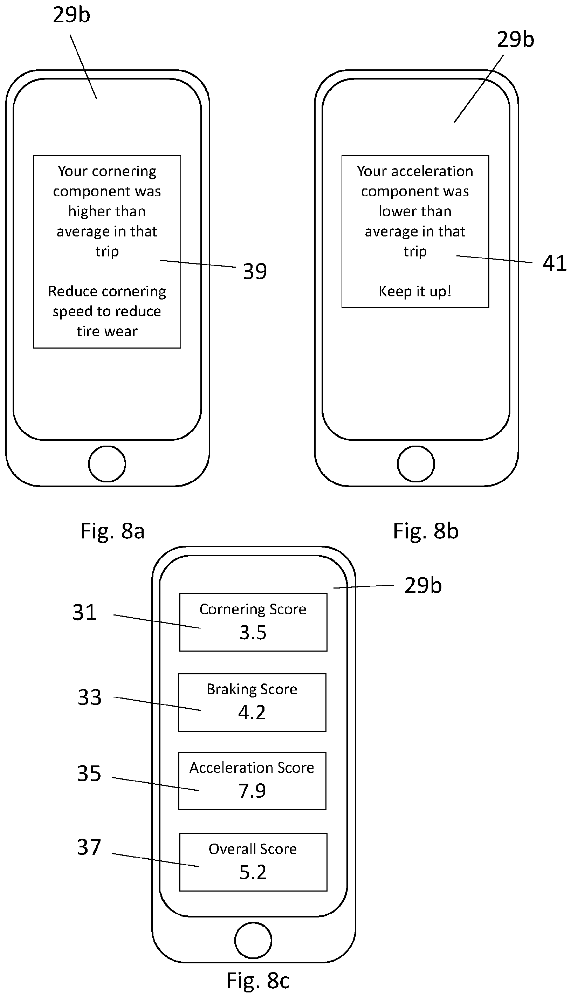

Fig. 8a shows an example of driver advice being indicated to a driver on a driver output unit 29b. A message 39 is based on a trip which has just been completed, and informs the driver that their cornering component was higher than average in that trip, and advises them to reduce cornering speed to reduce their tire wear.

Fig. 8b shows another example of driver advice being indicated to a driver on a driver output device 29b. A message 41 is based on a trip which has just been completed, and informs the driver that their acceleration component was lower than average in that trip and advises them to continue to accelerate in this manner.

In some examples, the method further comprises analysing the differences between the calculated components and the average values, and using the differences to generate a driver score. The score may be a score out of 10. The score may be a score out of 100 (e.g. a percentage) The score may be calculated according to how far above or below the average value the calculated components are. The driver score may be indicated to a driver on a driver output unit 29a, 29b and/or to a fleet manager on a fleet manager output device 29c.

Fig. 8C shows an example of driver scores being indicated to a driver on a driver output unit 29b. These scores are based on a single trip which has just been completed. Field 31 shows the cornering score, field 33 shows the braking score, field 35 shows the acceleration score, and field 37 shows an overall score which in the illustrated embodiment is the mean average of the cornering, braking, and acceleration score.

The driver scores may be calculated in any suitable manner. For example, the driver score may be calculated at the remote server 21. In the illustrated embodiment, the driver scores are based on the most recent single trip undertaken by the driver. In some embodiments however, the method comprises storing the data indicative of the differences between the calculated components and the average values (i.e. the driver performance data) generated over a plurality of trips in the memory 25 of the remote server 21, analysing the driver performance data with the processor 23, and generating a driver score based on the driver's performance over the plurality of trips. In embodiments, the driver score is generated based on a plurality of trips falling within a time window. The time window may be a fixed window comprising a predetermined time period (e.g. 30 days) and the driver's score may reset every 30 days. In other embodiments, the time window is a rolling window comprising a predetermined time period. In embodiments, the time window may be a rolling window of the last 30 days. In embodiments, the time window may not be based on time, and may instead be defined by a predetermined number of most recent trips undertaken by the driver.

The driver score may be sent to the fleet manager output unit 29c for output to a fleet manager. In embodiments, a driver may have a driver profile which is stored in the memory 25 of the remote server 21. The driver's profile may comprise that driver's score, and the driver's score may be updated whenever the driver drives a vehicle 1 within the fleet of vehicles.

In some embodiments, the driver performance data may be analysed locally at the vehicle device 27, without the need to connect to a remote server 21.

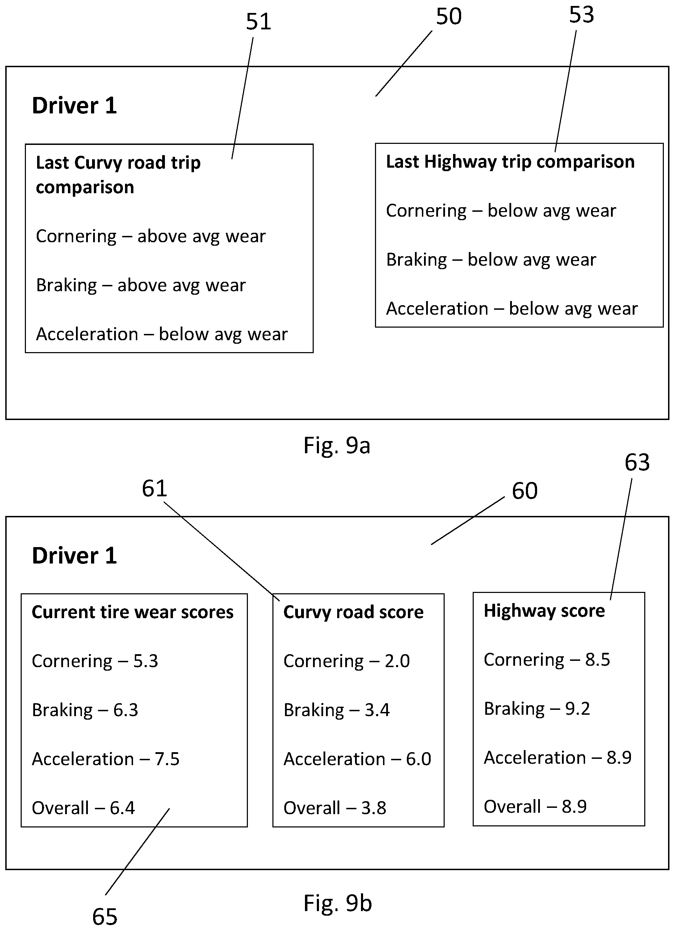

Figure 9a shows a summary page 50 which may be displayed to a fleet manager on a fleet manager output unit 29c. In output field 51, the outputs from the last curvy road trip undertaken by the driver are displayed. It can be seen that the driver had above average wear for both cornering and braking, but below average wear for acceleration. In output field 53, the outputs from the last highway trip undertaken by the driver are displayed. It can be seen that the driver had below average wear for cornering, braking and acceleration. In embodiments, only the most recent trip may be shown on the summary page 50, or the trips may not be categorised according to road type. By categorising the trips according to road type, further insights into the driver's behaviour can be realised. For example, in Figure 9a it can be seen that driver 1 is a good highway driver, with below average tire wear in all categories, but is a bad curvy road driver, with above average tire wear for both the cornering and braking components. A fleet manager may therefore determine that driver 1 requires specific curvy road training.

Figure 9b shows another summary page 60 which may be displayed to a fleet manager on a fleet manager output unit 29c. The summary page 60 corresponds to an embodiment in which driver scores are calculated. In output field 61, the driver scores for curvy road trips undertaken by the driver are displayed. It can be seen that the driver has poor scores for both cornering and braking. In output field 63, the driver scores for highway trips undertaken by the driver are displayed. It can be seen that the driver has good scores for all components when driving on highways. In output field 65, an overall score is shown which is a combination of the curvy road score and the highway score. In the illustrated embodiment, the overall scores represent mean averages of the curvy road and highway scores. In the illustrated embodiment, the driver scores are based on the most recent single trip undertaken by the driver (i.e. the most recent curvy road trip and the most recent highway trip). In some embodiments however, as discussed above, the scores may be generated using data collected over a plurality of trips. In embodiments, the overall scores in output field 65 may be weighted depending on how much driving the driver does on curvy roads and on highways.

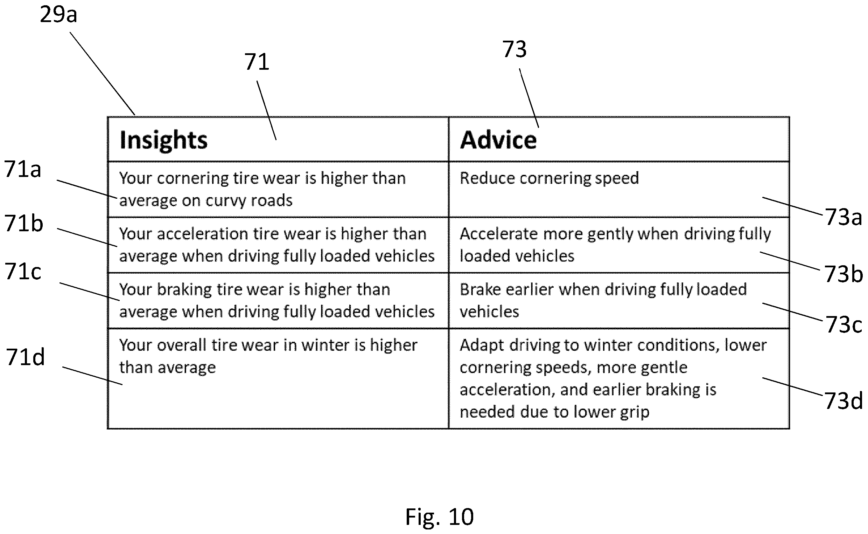

Figure 10 shows a summary page 70 which may be displayed to a driver on a driver output unit 29a. In embodiments, the method comprises repeating steps 101 to 127, discussed in relation to Figure 7, for a plurality of trips undertaken by a driver (in the same vehicle or in a plurality of different vehicles), storing the outputs provided at step 127 of the method 100 (e.g. in the memory 25 of the remote server 21), and analysing the outputs to provide driver insights. The driver insights 71a-d are displayed to the driver on summary page 70. The driver insights 71a-d illustrate how the different components of tire wear caused by the driver compare to average values for different operating conditions. For example, driver insight 71b informs the driver that their tire wear acceleration component is higher than average specifically when they drive fully loaded vehicles. Based on the driver insights, driver advice 73a-d is provided to the driver on the summary page 70. Driver insight 71d informs the driver that their overall tire wear in winter is higher than average. Driver advice 73d gives advice to the driver, based on driver insight 71d, to adapt their driving to winter conditions by lowering cornering speeds, accelerating more gently, and braking earlier. The summary page 70 may be updated continuously based on trips performed by the driver. In other embodiments, the summary page may be updated and provided at intervals, e.g. at the end of a month, or at the end of a quarter.

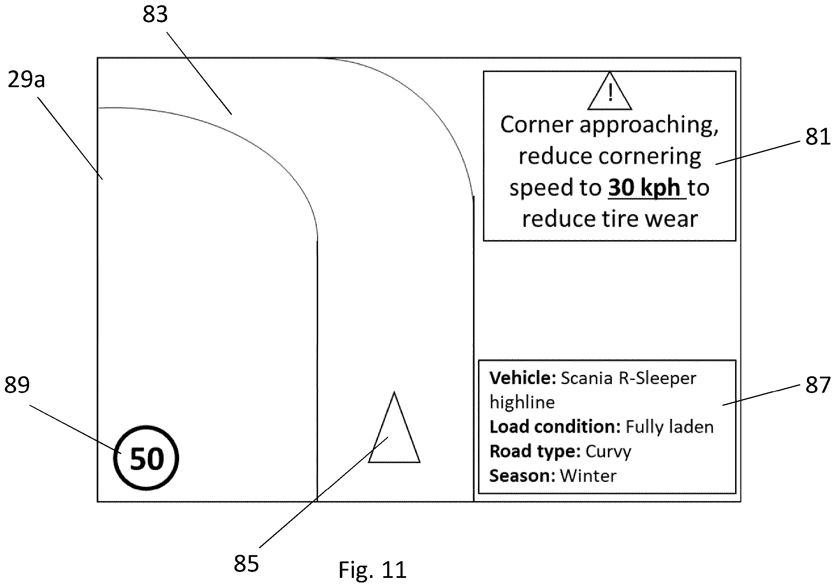

Figure 11 shows an alert 81 which may be provided to a driver of a vehicle during a trip, based on one or more outputs provided at step 127 of the method 100. The alert 81 is provided on a driver output unit 29a which in the illustrated embodiment is acting as a navigation device. The driver output unit 29a displays the route 83, and an icon 85 representing the vehicle. In the illustrated embodiment, the method comprises providing dynamic advice to the driver based on the current operating conditions, the route 83, and one or more outputs provided at step 127 of method 100. The vehicle type and current operating conditions (load condition, road type, and season) are displayed in field 87 on the driver output unit 29a. In the illustrated example, the driver has in one or more previous trips had a higher than average tire wear cornering component. As such, advice should be provided to the driver to reduce their cornering speed. When the vehicle is approaching a corner, alert 81 is provided to the driver which reminds the driver that because a corner is approaching, they should reduce their cornering speed to reduce tire wear. In the embodiment of Figure 11, the driver is given specific advice to reduce cornering speed to a recommended speed of 30 kph. The speed limit 89 is displayed on driver output unit 29a as 50 kph. The recommended cornering speed is calculated based on the speed limit 29a, the vehicle type, and the current operating conditions 87. In embodiments, the recommended speed may be calculated by determining an average cornering speed used by drivers in the same operating conditions with the same vehicle type.

The disclosed method focusses on a single tire. In embodiments, the method may only be performed for a single tire on the vehicle, and outputs (e.g. driver advice, driver scores etc) may be provided based on only the results for the single tire.

As discussed above, tires on different axles are subjected to different forces, and thus different wear. In embodiments, the method may be performed for a single tire on each axle of the vehicle. In such embodiments, general outputs (e.g. driver advice, driver scores etc) may be provided based on the combination of the results for the tires on the different axles (e.g. a score may be calculated based on the combination of results). In embodiments, axle specific outputs may be provided (e.g. "You are wearing out your drive axle tires more than average, accelerate more gently").

In embodiments, the method may be performed for all tires on the vehicle. In such embodiments, general outputs (e.g. driver advice, driver scores etc) may be provided based on the combination of the results for the tires on the different axles (e.g. a score may be calculated based on the combination of results). In embodiments, tire specific outputs may be provided.

With reference to Figure 7, the method has been described as calculating the wear energy index components for the at least one tire, and comparing these components to the average values for the wear energy index components. It will be understood that, as described above, the method can equally be performed by calculating the wear rate components (by applying weighting factors to the wear energy components to calculate the wear components, and then dividing by time or distance). Although performing the method using wear rate components involves further calculation steps, in particular, the derivation of different weighting factors for different tire specifications, vehicle specifications etc, the disclosed methods may be implemented as part of a wider vehicle/driver monitoring system and so these additional steps may be necessary also for other parts of the monitoring system.

It will be understood that disclosure made in relation to the wear energy embodiment of the method is equally applicable to the wear rate embodiment of the method.

In the above description of various embodiments of the present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which the present inventive concepts belong. It will be further understood that terms, such as those defined in commonly used dictionaries, should be interpreted as having a meaning that is consistent with their meaning in the context of this specification and the relevant art and will not be interpreted in an idealised or overly formal sense unless expressly so defined herein.

Many variations and modifications can be made to the embodiments without substantially departing from the principles of the present inventive concepts. All such variations and modifications are intended to be included herein within the scope of the present inventive concepts. Accordingly, the above disclosed subject matter is to be considered illustrative, and not restrictive, and the examples of embodiments are intended to cover all such modifications, enhancements, and other embodiments, which fall within the spirit and scope of present inventive concepts. Thus, to the maximum extent allowed by law, the scope of the present inventive concepts are to be determined by the broadest permissible interpretation of the present disclosure including the following claims and their equivalents, and shall not be restricted or limited by the foregoing detailed description.

**Claims**

1.  A computer implemented method for assessing the impact of vehicle usage on wear of at least one tire on a first vehicle, the method comprising:

    obtaining data indicative of the load acting on the tire, and of the longitudinal acceleration, lateral acceleration, and speed of the first vehicle;
    calculating tire wear energy index components for the least one tire on the first vehicle based at least in part on the obtained data, wherein the tire wear energy index is a measure of the wear energy exerted on the tire per unit distance or per unit time, and wherein the tire wear energy index components comprise one or more of:

    cornering components;
    braking components; and
    positive longitudinal acceleration components,

    obtaining historical data comprising the same tire wear energy index components for tires on the first vehicle and/or on another vehicle;
    calculating an average value for each tire wear energy index component in the historical data;
    comparing the calculated tire wear energy index components for the at least one tire with the calculated average values for the corresponding components in the historical data; and
    generating an output based on said comparison, wherein the output comprises an indication of any differences between the calculated tire wear energy index components for the at least one tire, and the calculated average values for the corresponding components in the historical data.

2.  The method of claim 1 comprising obtaining historical data comprising the same tire wear energy index components for tires on a plurality of vehicles, wherein the average value for each tire wear energy index component is calculated using the historical data for the tires on the plurality of vehicles.

3.  The method of claim 1 or claim 2, wherein the output comprises advice to a driver of the vehicle on how to alter their driving behaviour to reduce tire wear.

4.  The method of any preceding claim, wherein the at least one tire is classified according to the axle on which it is mounted, wherein such tire axle classifications include at least steer axle tires and drive axle tires, and wherein the average values for each tire wear energy index component are calculated using only historical data from tires having the same tire axle classification.

5.  The method of claim 4, wherein the first vehicle is a heavy goods vehicle (HGV), wherein the at least one tire is classified as one of a steer axle tire, a drive axle tire, or a trailer tire and wherein the average values for each tire wear energy index component are calculated using only historical data from tires having the same classification.

6.  The method of claim 2, or any of claims 3-5 when dependent on claim 2, wherein the average values for each tire wear energy index component are calculated using only historical data which relates to tires on vehicles within the plurality of vehicles which are of the same type as the first vehicle.

7.  The method of any preceding claim, wherein the method comprises determining one or more operating conditions of the vehicle and wherein the average values are calculated using only historical data which relates to tires on the first vehicle and/or on other vehicles operating under at least one of the same operating conditions.

8.  The method of claim 7, wherein the average values for each tire wear energy index component are calculated using only historical data which relates to tires of vehicles operating under a plurality of the same operating conditions

9. The method of claim 7 or claim 8, wherein the operating conditions comprise one or more of: load condition, road type, ambient temperature, season, terrain.

10. The method of claim 9, wherein determining the operating conditions of the first vehicle comprises obtaining one or more of: data indicative of the vehicle location, data indicative of the vehicle load, ambient temperature data, date data.

11. The method of claim 10, comprising obtaining data indicative of a location of the first vehicle, determining on which road within a navigable network the first vehicle is travelling, and determining the road type of said road using a database comprising pre-set road type classifications for the roads within the navigable network.

12. The method of claim 10 or claim 11, comprising determining the road type of a road on which the first vehicle is travelling using the obtained data indicative of the longitudinal acceleration, lateral acceleration, and speed of the first vehicle.

13. A computer implemented method for assessing the impact of vehicle usage on wear of at least one tire on a first vehicle, the method comprising:

obtaining data indicative of the load acting on the tire, and of the longitudinal acceleration, lateral acceleration, and speed of the first vehicle;
calculating tire wear rate components for the least one tire on the first vehicle based at least in part on the obtained data, and wherein the tire wear rate components comprise one or more of:

cornering components;
braking components; and
positive longitudinal acceleration components,

obtaining historical data comprising the same tire wear rate components for tires on the first vehicle and/or on another vehicle;
calculating an average value for each tire wear rate component in the historical data;
comparing the calculated tire wear rate components for the at least one tire with the calculated average values for the corresponding components in the historical data; and
generating an output based on said comparison, wherein the output comprises an indication of any differences between the calculated tire wear rate components for the at least one tire, and the calculated average values for the corresponding components in the historical data.

14. A computer system configured to perform a method for assessing the impact of vehicle usage on wear of at least one tire on a first vehicle, wherein the computer system is configured to:

obtain data indicative of the load acting on the tire, and of the longitudinal acceleration, lateral acceleration, and speed of the first vehicle;
calculate tire wear energy index components for the least one tire on the first vehicle based at least in part on the obtained data, wherein the tire wear energy index is a measure of the wear energy exerted on the tire per unit distance or per unit time, and wherein the tire wear energy index components comprise one or more of:

cornering components;
braking components; and
positive longitudinal acceleration components,

obtain historical data comprising the same tire wear energy index components for tires on the first vehicle and/or on another vehicle;
calculate an average value for each tire wear energy index component in the historical data;
compare the calculated tire wear energy index components for the at least one tire with the calculated average values for the corresponding components in the historical data; and
generate an output based on said comparison, wherein the output comprises an indication of any differences between the calculated tire wear energy index components for the at least one tire, and the calculated average values for the corresponding components in the historical data.

15. A computer system configured to perform a method for assessing the impact of vehicle usage on wear of at least one tire on a first vehicle, wherein the computer system is configured to:

obtain data indicative of the load acting on the tire, and of the longitudinal acceleration, lateral acceleration, and speed of the first vehicle;

calculate tire wear rate components for the least one tire on the first vehicle based at least in part on the obtained data, and wherein the tire wear rate components comprise one or more of:

cornering components;
braking components; and
positive longitudinal acceleration components,

obtain historical data comprising the same tire wear rate components for tires on the first vehicle and/or on another vehicle;

calculate an average value for each tire wear rate component in the historical data;

compare the calculated tire wear rate components for the at least one tire with the calculated average values for the corresponding components in the historical data; and

generate an output based on said comparison, wherein the output comprises an indication of any differences between the calculated tire wear rate components for the at least one tire, and the calculated average values for the corresponding components in the historical data.

Fig. 1

Fig. 2a

Fig. 2b

Fig. 2c

Ax DOE log hist pre-14 Sept (Curvy routes)

Fig. 3a

Ay DOE log hist pre-14 Sept (Curvy routes)

Fig. 3b

Ax DOE log hist From 14 September onwards (Highway routes)

Fig. 4a

Ay DOE log hist From 14 September onwards (Highway routes)

Fig. 4b

Fig. 5a

| KPM | | Highway | Curvy |
|---|---|---|---|
| Steer | Unladen | 24111 | 19176 |
| | Laden | 23463 | 14847 |
| | | | |
| Drive | Unladen | 33299 | 21645 |
| | Laden | 29266 | 12472 |
| | | | |
| T1 | Unladen | 55162 | 30906 |
| | Laden | 17872 | 9504 |
| | | | |
| T2 | Unladen | 132189 | 78722 |
| | Laden | 90813 | 46791 |
| | | | |
| T3 | Unladen | 52222 | 18941 |
| | Laden | 18307 | 6169 |

Fig. 5b

| KPM | | Highway | Curvy |
|---|---|---|---|
| Steer | Unladen | 100% | 80% |
| | Laden | 97% | 62% |
| | | | |
| Drive | Unladen | 100% | 65% |
| | Laden | 88% | 37% |
| | | | |
| T1 | Unladen | 100% | 56% |
| | Laden | 32% | 17% |
| | | | |
| T2 | Unladen | 100% | 60% |
| | Laden | 69% | 35% |
| | | | |
| T3 | Unladen | 100% | 36% |
| | Laden | 35% | 12% |

Fig. 5c

Fig. 6

101 | Select the tire to be assessed and determining its axle classification (knowing what axle it's on)

100

103 | obtain data indicative of the load acting on the tire, and the longitudinal acceleration, lateral acceleration, and speed of the vehicle

Calculate a cornering component of the tire wear energy index for the least one tire on the vehicle based at least in part on the obtained data

105

calculate a braking component of the tire wear energy index for the least one tire on the vehicle based at least in part on the obtained data

107

calculate an acceleration component of the tire wear energy index for the least one tire on the vehicle based at least in part on the obtained data

109

111 | Determine the current operating conditions of the vehicle

113 | Obtaining historical data comprising the same tire wear energy index components for other tires

Calculating an average value for the cornering component using historical data collected from tires which have the same axle classification and had the same operating conditions as the tire being assessed

115

Calculating an average value for the braking component using historical data collected from tires which have the same axle classification and had the same operating conditions as the tire being assessed

117

Calculating an average value for the acceleration component using historical data collected from tires which have the same axle classification and had the same operating conditions as the tire being assessed

119

Compare the calculated cornering component to the average cornering component value

121

Compare the calculated braking component to the average cornering component value

123

Compare the calculated acceleration component to the average cornering component value

125

127 | Provide an output indicating any differences between the calculated components and the average values

Fig. 7

29b

Your cornering
component was
higher than
average in that
trip

Reduce cornering
speed to reduce
tire wear

39

**Fig. 8a**

29b

Your acceleration
component was
lower than
average in that
trip

Keep it up!

41

**Fig. 8b**

29b

31

Cornering Score
3.5

33

Braking Score
4.2

35

Acceleration Score
7.9

37

Overall Score
5.2

**Fig. 8c**

51    50    53

**Driver 1**

**Last Curvy road trip comparison**

Cornering – above avg wear

Braking – above avg wear

Acceleration – below avg wear

**Last Highway trip comparison**

Cornering – below avg wear

Braking – below avg wear

Acceleration – below avg wear

Fig. 9a

61    60    63

**Driver 1**

**Current tire wear scores**

Cornering – 5.3

Braking – 6.3

Acceleration – 7.5

Overall – 6.4

**Curvy road score**

Cornering – 2.0

Braking – 3.4

Acceleration – 6.0

Overall – 3.8

**Highway score**

Cornering – 8.5

Braking – 9.2

Acceleration – 8.9

Overall – 8.9

65

Fig. 9b

| Insights | Advice |
|---|---|
| Your cornering tire wear is higher than average on curvy roads | Reduce cornering speed |
| Your acceleration tire wear is higher than average when driving fully loaded vehicles | Accelerate more gently when driving fully loaded vehicles |
| Your braking tire wear is higher than average when driving fully loaded vehicles | Brake earlier when driving fully loaded vehicles |
| Your overall tire wear in winter is higher than average | Adapt driving to winter conditions, lower cornering speeds, more gentle acceleration, and earlier braking is needed due to lower grip |

Fig. 10

EP 4 782 225 A1

Fig. 11

EP 4 782 225 A1

Europäisches Patentamt
European Patent Office
Office européen des brevets

## EUROPEAN SEARCH REPORT

**Application Number**

EP 25 15 3429

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/113494 A1 (SINGH KANWAR BHARAT [US] ET AL) 27 April 2017 (2017-04-27) * paragraph [0048] - paragraph [0078]; figures 1-11 * | 1-15 | INV. B60C11/24 ADD. B60C23/04 |
| A | US 2021/394562 A1 (SINGH KANWAR BHARAT [LU]) 23 December 2021 (2021-12-23) * paragraph [0073] - paragraph [0089]; figure 15 * | 1-15 | |
| A | US 2024/257582 A1 (KATSUNO HIROYUKI [JP]) 1 August 2024 (2024-08-01) * paragraph [0017] - paragraph [0060]; figures 1-5 * | 1-15 | |
| A | JP 2011 149879 A (YOKOHAMA RUBBER CO LTD) 4 August 2011 (2011-08-04) * see the enclosed translation of the description; figures 1-12 * | 1-15 | |
| A | EP 1 429 135 A2 (BRIDGESTONE CORP [JP]) 16 June 2004 (2004-06-16) * paragraph [0002] - paragraph [0243]; figures * | 1-15 | TECHNICAL FIELDS SEARCHED (IPC) B60C |
| A | WO 2023/110713 A1 (BRIDGESTONE EUROPE NV SA [BE]) 22 June 2023 (2023-06-22) * the whole document * | 1-15 | |

The present search report has been drawn up for all claims

| Place of search | Date of completion of the search | Examiner |
|---|---|---|
| Munich | 22 May 2025 | Jung, Wolfgang |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P4C01)

## ANNEX TO THE EUROPEAN SEARCH REPORT
## ON EUROPEAN PATENT APPLICATION NO.

EP 25 15 3429

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2025

| Patent document cited in search report | Publication date | Patent family member(s) | Publication date |
|---|---|---|---|
| US 2017113494 A1 | 27-04-2017 | NONE | |
| US 2021394562 A1 | 23-12-2021 | NONE | |
| US 2024257582 A1 | 01-08-2024 | CN 117460942 A | 26-01-2024 |
| | | EP 4332537 A1 | 06-03-2024 |
| | | JP 2023008677 A | 19-01-2023 |
| | | US 2024257582 A1 | 01-08-2024 |
| | | WO 2023281943 A1 | 12-01-2023 |
| JP 2011149879 A | 04-08-2011 | JP 5504912 B2 | 28-05-2014 |
| | | JP 2011149879 A | 04-08-2011 |
| EP 1429135 A2 | 16-06-2004 | DE 69918610 T2 | 21-07-2005 |
| | | DE 69929545 T2 | 27-07-2006 |
| | | EP 0969276 A2 | 05-01-2000 |
| | | EP 1429135 A2 | 16-06-2004 |
| | | ES 2222664 T3 | 01-02-2005 |
| | | ES 2257716 T3 | 01-08-2006 |
| | | US 6269690 B1 | 07-08-2001 |
| WO 2023110713 A1 | 22-06-2023 | CN 118679068 A | 20-09-2024 |
| | | EP 4194231 A1 | 14-06-2023 |
| | | JP 2024546258 A | 19-12-2024 |
| | | US 2025052567 A1 | 13-02-2025 |
| | | WO 2023110713 A1 | 22-06-2023 |

EPO FORM P0459

For more details about this annex : see Official Journal of the European Patent Office, No. 12/82